# EUROPEAN PATENT APPLICATION

(11) **EP 1 672 200 A2**
(43) Date of publication of application: **21.06.2006**
(21) Application number: 05256102.4
(22) Date of filing: 29.09.2005
(51) Int. Cl.: F02C 9/28

(54) **Method and apparatus for assessing gas turbine acceleration capability**

(30) Priority: 14.12.2004 US 11308
(71) Applicant: GENERAL ELECTRIC COMPANY, Schenectady, NY 12345 (US)
(72) Inventor: Ashby, Malcolm John, Hamilton, OH 45011 (US); Bennett, George W., Cincinnati Ohio 45242 (US)
(74) Representative: Pedder, James Cuthbert

(57) **Abstract**

A method for monitoring performance of a gas turbine engine includes, during acceleration of an engine, accumulating regulator indices from an engine controller and times accumulated on acceleration regulators. At least one engine sensor value is also monitored after reaching a steady state takeoff power. The regulator indices, accumulated times, and the one or more monitored engine sensor values are used in a regression equation to normalize current engine regulator usage to a reference condition. The method further includes comparing the normalized current engine regulator usage to a historical value of engine regulator usage derived from prior takeoff data, and utilizing results of the comparison to indicate whether to perform proactive maintenance on the engine.

## Description

This invention relates generally to gas turbine engines, and more particularly to methods and apparatus for analyzing the performance of gas turbine engines and assessing their acceleration performance characteristics.

Gas turbine engines must meet a minimum acceleration time from idle to maximum power to provide adequate thrust response. The amount of fuel needed to meet this requirement tends to increase as the engine wears with use. Eventually, after some period of time, a maximum allowable fuel flow rate is reached and acceleration rates decrease. Slow acceleration rates can adversely affect performance during takeoff and emergency procedures.

At least one known acceleration trending technique employs measurements of time from one power setting to a higher power setting as the engine accelerates. For engines that use a N1 trajectory and/or N2dot acceleration strategy, however, the time to accelerate is generally held constant throughout the majority of the engine life, even though the engine performance level is reduces as the engine ages.

Some known digitally-controlled engines employ an acceleration strategy based largely on fan speed trajectory and/or core speed acceleration. As these engines wear, the acceleration rate is maintained by increasing fuel flow rates accordingly. This strategy benefits the operator by providing a relatively constant acceleration time throughout a large portion of the life of the engine. However, operability will still be affected once the maximum allowable fuel flow rate is reached. Moreover, this acceleration strategy does not provide information to an operator that would tell him or her when an engine will begin to exhibit slower response. Thus, proactive maintenance planning with engines using this strategy is difficult.

Some configurations of the present invention therefore provide a method for monitoring performance of a gas turbine engine. The method includes, during acceleration of an engine, accumulating regulator indices from an engine controller and times accumulated on acceleration regulators. At least one engine sensor value is also monitored after reaching a steady state takeoff power. The regulator indices, accumulated times, and the one or more monitored engine sensor values are used in a regression equation to normalize current engine regulator usage to a reference condition. The method further includes comparing the normalized current engine regulator usage to a historical value of engine regulator usage derived from prior takeoff data, and utilizing results of the comparison to indicate whether to perform proactive maintenance on the engine.

Also, some configurations of the present invention provide an apparatus for monitoring gas turbine engines. The apparatus includes a processor, at least one input port operatively coupled to the processor, and a memory with instructions stored therein. The instructions are configured to instruct the processor to, during acceleration, accumulate regulator indices from an engine controller and times accumulated on acceleration regulators and monitor at least one engine sensor value after reaching a steady state takeoff power. The instructions are also configured to instruct the processor to use the regulator indices, accumulated times, and the one or more monitored engine sensor values in a regression equation to normalize current engine regulator usage to a reference condition. The instructions also instruct the processor to compare normalized current engine regulator usage to a historical value of engine regulator usage derived from prior takeoff data. The processor is also instructed to use results of the comparison to indicate that proactive maintenance on the engine should be performed.

Still other configurations of the present invention provide a machine readable medium or media. The medium or media have instructions recorded thereon that are configured to instruct a processor to, during acceleration, accumulate regulator indices from an engine controller and times accumulated on acceleration regulators and monitor at least one engine sensor value after reaching a steady state takeoff power. The instructions further are configured to instruct the processor to use the regulator indices, accumulated times, and the one or more monitored engine sensor values in a regression equation to normalize current engine regulator usage to a reference condition and compare the normalized current engine regulator usage to a historical value of engine regulator usage derived from prior takeoff data. The instructions further are configured to instruct the processor to utilize results of the comparison to provide an indication that proactive maintenance on the engine should be performed.

Still other configurations of the present invention provide a method for monitoring performance of gas turbine engines. The method includes determining a regression equation to determine a normalized acceleration capability. The method further includes, during acceleration of an engine, accumulating regulator indices from an engine controller and times accumulated on acceleration regulators, and monitoring at least one engine sensor value after reaching a steady state takeoff power. The method also includes using the regulator indices, accumulated times, and the at least one monitored engine sensor value in a regression equation to normalize current engine regulator usage to a reference condition. The method also includes comparing the normalized current engine regulator usage to a historical value of engine regulator usage derived from prior takeoff data, and utilizing results of the comparison to indicate whether to perform proactive maintenance on the engine.

In yet another configuration of the present invention, there is provided a gas turbine engine apparatus that includes a gas turbine engine configured to employ an acceleration strategy that includes fan speed trajectory and/or core speed acceleration. Also included is an engine controller, a plurality of acceleration regulators, at least one engine sensor, a processor, at least one input port operatively coupled to the processor, and a memory. The memory has instructions stored therein that are configured to instruct the processor to, during acceleration, accumulate regulator indices from an engine controller and times accumulated on acceleration regulators, and monitor at least one engine sensor value after reaching a steady state takeoff power. The memory also has instructions stored therein that are configured to instruct the processor to use the regulator indices, accumulated times, and the one or more monitored engine sensor values in a regression equation to normalize current engine regulator usage to a reference condition. The instructions also compare the normalized current engine regulator usage to a historical value of engine regulator usage derived from prior takeoff data; and utilize results of the comparison to indicate whether to perform proactive maintenance on the engine.

Still other configurations of the present invention provide a method for monitoring performance of a gas turbine engine. The method includes comparing current engine regulator usage during takeoff acceleration to a historical value of engine regulator usage derived from prior takeoff data, and utilizing results of the comparison to indicate whether to perform proactive maintenance on the engine.

It will thus become evident that configurations of the present invention provide acceleration capability trends that are not dependent upon measuring changes in acceleration time. Such configurations are advantageous for engines employing an N1 trajectory and/or N2dot acceleration strategy. Such trending of acceleration capability is a useful tool to track potential poor performers and avoid related operational events.

The invention will now be described in greater detail, by way of example, with reference to the drawings, in which:-
Figure 1 is a block diagram of one configuration of gas turbine engine apparatus of the present invention.
Figure 2 is a flow chart representative of a method used in some configurations of the present invention.

Some configurations of the present invention provide technical effects including providing an alert to indicate that maintenance of a gas turbine engine should be performed. In addition, a method is provided to trend acceleration capability that is not dependent upon measuring changes in acceleration time is therefore advantageous for engines employing an N1 trajectory and/or N2dot acceleration strategy. By trending of acceleration capability, potential poor performers are tracked, and an additional technical effect of some configurations of the present invention is to avoid operational events relating to decreases in available acceleration rates.

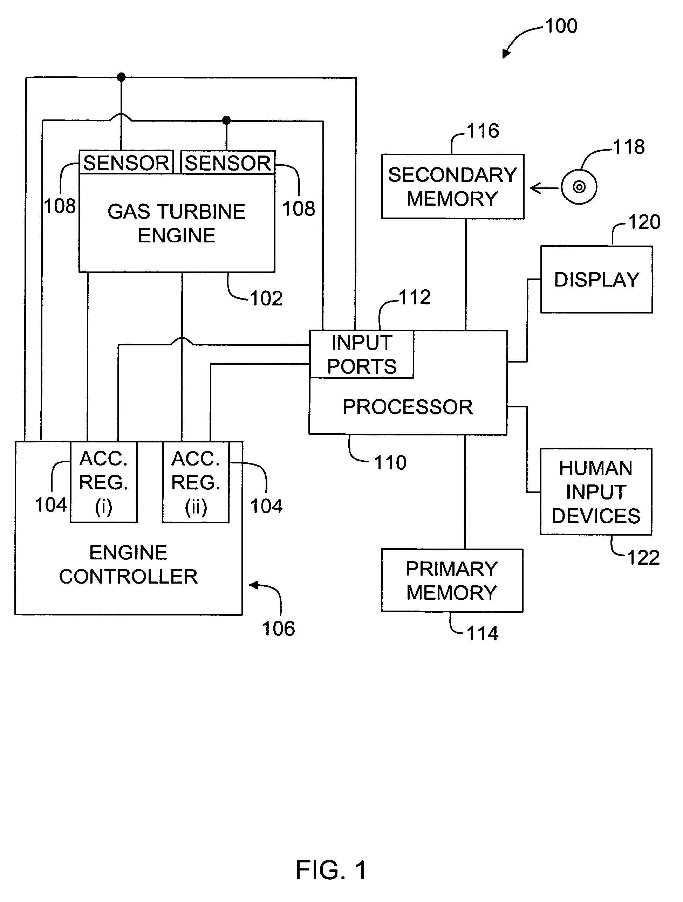

In some configurations and referring to the block diagram of Figure 1, a gas turbine engine apparatus 100 includes a gas turbine engine 102, one or more engine regulators 104, and an engine controller 106. Engine 102, regulator(s) 104, and controller 106 are configured to employ either or both of a fan speed trajectory or core speed acceleration strategy in various configurations. At least one engine sensor 108 is also provided. Sensor or sensors 108 may include a fan speed sensor, a fuel metering valve position sensor, a turbine exit temperature sensor, an ambient temperature sensor, and/or an ambient pressure sensor, or combinations thereof. Moreover, sensor or sensors 108 may include more than one of any or all of these types of sensors.

Gas turbine engine apparatus 100 also includes a computing apparatus that includes a processor 110, one or more input ports 112, and memory. The memory may include a primary memory 114 such as a random access memory or RAM and/or read-only memory or ROM. The memory may also include a secondary memory or storage device 116, such as a hard disk drive, a CD-ROM drive, a DVD drive, etc. Many types of memory and storage devices that provide memory are known in the art. Thus, the selection of primary memory 114 and secondary memory 116, and/or even whether to divide the memory into two or more types or sections may be left as a design choice to a design engineer skilled in the art of digital circuit and/or computer design.

In some configurations of the present invention, instructions configured to instruct processor 110 to perform steps of one or more configurations of the methods discussed herein are stored in a memory. For example, these instructions may be store in memory 114 (for example, as firmware in ROM) or on a medium or media 118 such as a CD-ROM that is read by secondary memory storage device 116. Other common types of media include CD-RW, CD-R, DVD, DVD-R, DVD+R, DVD-RW, DVD+RW, magnetic media (tapes, disks, etc.), flash memory storage devices, ROM cards, etc. The type of medium used and whether to provide the program on media (e.g., by splitting the instructions, arbitrarily or otherwise, across several of the same or different types of media) are also left as design choices. Such choices can be made by a computer programmer, for example, perhaps in consultation with a computer design engineer.

In some configurations, the computing apparatus portion of gas turbine apparatus 100 also includes one or more displays and/or alarm devices 120. For example, display 120 can comprise a CRT display, an LCD display, a plasma display, or a printer. An audible alerting device can also be provided, although in many configurations, alerts are visually indicated on a display 120. (An audible device is considered herein to provide an "audible display" of an alert. Thus, as used herein, "displaying" an alert refers to any combination of audible and/or visible alert signal.) Human input devices 122 are provided in some configurations of the present invention to control processor 110. For example, devices 122 can include a pointing device such as a mouse or trackball, and/or a keyboard or button pad.

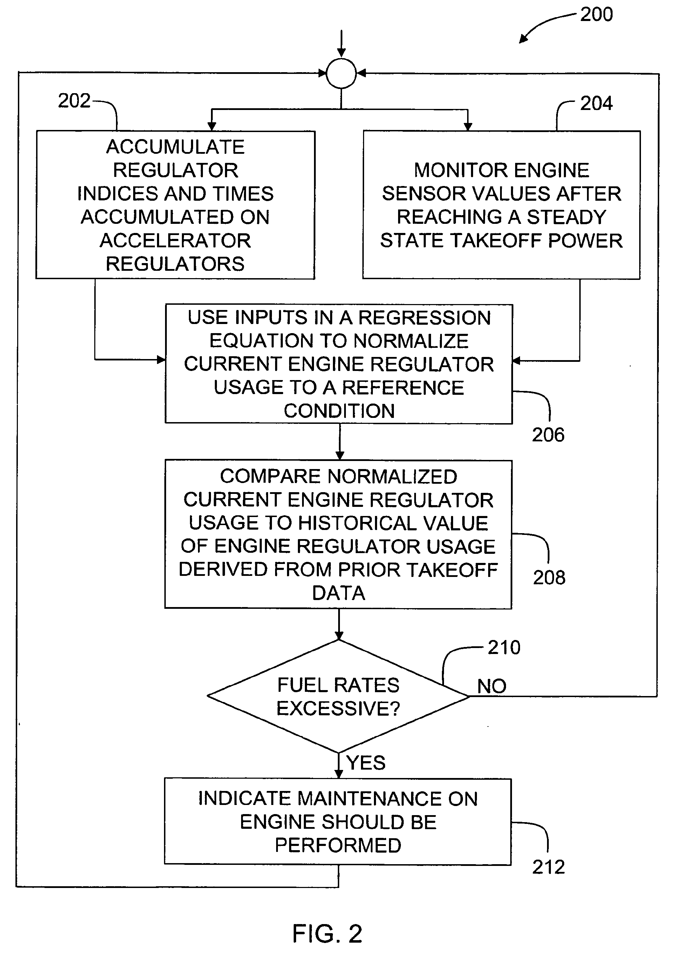

In some configurations of the present invention and referring to Figure 1 and flow chart 200 of Figure 2, at least one technical effect of the present invention is achieved by processor 110 monitoring engine controller 106 regulator usage 108 during engine 102 acceleration. Processor 110 normalizes this usage to a reference set of conditions and trends the resulting usage over time. During engine 102 operation an engine controller 106 selects a regulator 104 (only one of which is shown in Figure 1) based upon a difference between a commanded input state and the current engine 102 operating state. That is, the selection made by engine controller depends upon whether engine 102 is required to accelerate, decelerate or remain at steady state conditions.

More particularly, regulator indices (i.e., an index number of the regulator 104 selected by engine controller 106) are accumulated 102 by processor 110 (e.g., via input port or ports 112) during acceleration from ground idle to takeoff power. The times accumulated on each acceleration regulator 104 during this operation are also measured and accumulated. Engine sensors 108 also provide monitored conditions 204 to processor 110 (e.g., via input port or ports 112). These sensed conditions include values such as fan speed, fuel metering valve position, turbine exit temperature, and operating conditions such as ambient temperature and pressure are recorded after reaching steady state takeoff power. These data are used as input by processor 110 to a regression equation or routine in accordance with programmed instructions to calculate or determine 206 a normalized acceleration capability. This normalization step is provided to ensure that current acceleration capability can be compared to similar data from prior accelerations which may have been conducted under different conditions. Such data may have been acquired during tests at airports having different altitudes, tests on days with substantially different temperatures, and/or tests with different engine bleed configurations. These and other different conditions can affect acceleration capability to a greater or lesser degree.

The regression routine at 206 utilizes a relationship or equation derived in some configurations by using a large number of simulated takeoff acceleration transients. These transients are simulated over a specified operating regime (altitude, ambient temperature, bleed settings, etc.) for different engine quality, deterioration levels and/or with random levels of measurement error on the fuel metering valve. A multivariate regression fit is used to determine normalized acceleration regulator 104 usage as a function of sensor 108 data, operating conditions, and regulator 104 usage (i.e. which regulator 104 is in control and for how long). The regression fit can be obtained by any of several techniques well known to those skilled in the art, for example, linear regression, response surface fits using polynomials or neural networks.

This normalized capability is then trended by comparing 208 the current normalized engine regulator usage to a historical value derived from prior takeoff data. If the regulator usage indicates that fuel rates are excessive 210, for example, an alert is displayed using display 120 (for example), and proactive maintenance is performed 212 on engine 102 by qualified maintenance personnel to rectify the situation. The alert itself may comprise a quantitative display of normalized engine parameters that are interpreted by qualified maintenance personnel or engineers, so that step 210 need not, in every configuration, be a determination performed by processor 110 or solely by processor 110.

It will thus be appreciated that configurations of the present invention provide engine monitoring of regulator usage, which changes as the engine ages, rather that time to accelerate, which does not.

This disclosure proposes a trending approach that monitors regulator usage, which changes as the engine deteriorates, rather than the time to accelerate, which does not. Thus, proactive maintenance can be employed for engines employing an N1 trajectory and/or N2dot acceleration strategy.

## Claims

1. A method for monitoring performance of a gas turbine engine (102), said method comprising:
during acceleration of an engine (102), accumulating (202) regulator (104) indices from an engine controller (106) and times accumulated on acceleration regulators;
monitoring (204) at least one engine sensor (108) value after reaching a steady state takeoff power;
using (206) the regulator indices, accumulated times, and the at least one monitored engine sensor value in a regression equation to normalize current engine regulator usage to a reference condition;
comparing (208) the normalized current engine regulator usage to a historical value of engine regulator usage derived from prior takeoff data; and
utilizing (210, 212) results of the comparison to indicate whether to perform proactive maintenance on the engine.

2. A method in accordance with Claim 1 wherein said regulator indices and accumulated times are obtained during acceleration from ground idle to takeoff power.

3. A method in accordance with Claim 1 wherein said at least one engine sensor value comprises one or more members of the group consisting of fan speed, fuel metering valve position, turbine exit temperature, ambient temperature and ambient pressure.

4. A method in accordance with Claim 1 wherein said fitting the accumulated regulator indices and measured times to a regression equation comprises utilizing at least one member of the group consisting of linear regression, response surface fit using polynomials, and a neural network.

5. An apparatus for monitoring gas turbine engines, said apparatus comprising a processor (110), at least one input port (112) operatively coupled to the processor, and a memory (114, 116) with instructions stored therein configured to instruct the processor to:
during acceleration, accumulate (202) regulator (104) indices from an engine controller (106) and times accumulated on acceleration regulators;
monitor (204) at least one engine sensor (108) value after reaching a steady state takeoff power;
use (206) the regulator indices, accumulated times, and the at least one monitored engine sensor value in a regression equation to normalize current engine regulator usage to a reference condition;
compare (208) the normalized current engine regulator usage to a historical value of engine regulator usage derived from prior takeoff data; and
utilize (210, 212) results of the comparison to indicate proactive maintenance on the engine should be performed.

6. An apparatus in accordance with Claim 5 configured to obtain said regulator indices and accumulated times during acceleration from ground idle to takeoff power.

7. An apparatus in accordance with Claim 5 wherein said at least one engine sensor value comprises one or more members of the group consisting of fan speed, fuel metering valve position, turbine exit temperature, ambient temperature and ambient pressure.

8. An apparatus in accordance with Claim 5 wherein to use said regression equation, said apparatus is configured to perform at least one operation selected from the group consisting of linear regression, response surface fitting using polynomials, and neural networks.

9. A gas turbine engine apparatus (100), said apparatus comprising a gas turbine engine (102) configured to employ an acceleration strategy including at least one member of the group consisting of fan speed trajectory and core speed acceleration, an engine controller (106), a plurality of acceleration regulators (104), at least one engine sensor (108), a processor (110), at least one input port (112) operatively coupled to the processor, and a memory (114, 116) with instructions stored therein configured to instruct the processor to:
during acceleration, accumulate (202) regulator indices from the engine controller and times accumulated on acceleration regulators;
monitor (204) at least one said engine sensor value after reaching a steady state takeoff power;
use (206) the regulator indices, accumulated times, and the at least one monitored engine sensor value in a regression equation to normalize current engine regulator usage to a reference condition;
compare (208) the normalized current engine regulator usage to a historical value of engine regulator usage derived from prior takeoff data; and utilize (210, 212) results of the comparison to indicate whether to perform proactive maintenance on the engine.

10. A method for monitoring performance of a gas turbine engine (102), said method comprising:
comparing (208) current engine regulator (104) usage during takeoff acceleration to a historical value of engine regulator usage derived from prior takeoff data; and
utilizing (210, 212) results of the comparison to indicate whether to perform proactive maintenance on the engine.
